# EUROPEAN PATENT SPECIFICATION

(11) **EP 2 247 882 B1**
(45) Date of publication and mention of the grant of the patent: **27.02.2013**
(21) Application number: 08872578.3
(22) Date of filing: 06.11.2008
(51) Int. Cl.: F16L 3/137, F16L 33/035, B65D 63/10

(54) **TIE WRAP CONNECTOR**
KABELBINDER
ATTACHE RAPIDE

(30) Priority: 22.02.2008 US 66760
(43) Date of publication of application: 10.11.2010
(73) Proprietor: EMD Millipore Corporation, Billerica, MA 01821 (US)
(72) Inventor: CIANCIOLO, Joseph, Hudson, NH 03051 (US)
(74) Representative: Henkel, Breuer & Partner
(86) International application number: PCT/US2008/012526
(87) International publication number: WO 2009/105079

(56) References cited:
- EP-A- 0 937 930
- WO-A-90/02284
- US-A- 3 376 004
- US-A- 3 484 905
- US-A- 5 966 781
- US-A1- 2007 023 586

## Description

### BACKGROUND OF THE INVENTION

### FIELD OF THE INVENTION

This invention relates to a tie wrap connector for connecting a flexible conduit to a fitting such as a barbed fitting.

### DESCRIPTION OF PRIOR ART

Flexible tubing is widely utilized to deliver fluid from a fluid source to a storage site or fluid treatment site. The flexible tubing is connected to the storage volume or fluid treatment site in order to provide the desired fluid delivery. It is common practice to secure the flexible tubing to a barbed conduit in order to transfer fluid from a first location to a second location. It is necessary to provide a secure and leak proof connection at the end of the flexible tubing in order to avoid fluid contamination and/or leakage. Such a secure connection is particularly required in medical and pharmaceutical applications such as blood pumps, oxygen concentration cartridges, filtration cartridges, intravenous bags or the like.

At the present time, cable ties are utilized to provide a secure connection at the end of the flexible tubing. Cable ties comprise a strap and a locking head shaped to be locked to each other during their use. Presently available cable ties have the disadvantage of not being capable of providing a compressive force about the entire circumference of the flexible tubing. This disadvantage results from the locking head not being sufficiently flexible to follow the contour of the outside surface of the flexible tubing. Accordingly, the risk of leakage is increased at the portion of the outside surface of the flexible tubing subject to decreased compressive force.

Accordingly, it would be desirable to provide a connector for connecting a flexible tubing to a barbed fitting which prevents leakage and/or contamination of fluid located within the flexible tubing. In addition, it would be desirable to provide such a connector which remains intact even at elevated fluid pressure within the flexible tubing. Such a connector would provide ease of installation as well as security against fluid leakage or fluid contamination.

WO90/02284 discloses a one-piece tie wrap connector according to the preamble of claim 1 made from plastic material comprising integral lateral extensions formed at the locking head, which incline outwardly and are curved for fitting in complementary manner against an article around which the strap is looped in use.

US5966781 teaches a spacing clamp tie wrap connector to secure two elongated items in spaced, parallel relationship with each other.

US2007/0023586 teaches a harness clamp tie for fastening onto a mounting structure such as an aperture in a panel.

### SUMMARY OF THE INVENTION

According to the present invention there is provided a tie wrap connector as defined in claim 1. Preferred embodiments are defined in the dependent claims.

The present invention provides a tie wrap connector which includes a solid insert having an arc shaped surface which conforms to an outside surface of a flexible conduit. The insert is a separate piece from the tie wrap connector. The tie wrap connector includes a strap having a free end and a second end joined to a strap locking head. The strap includes a stepped surface which permits locking the strap within the locking head. The locking head has an opening to receive the free end of the strap. The locking head includes a ratcheting panel that receives the steps of the strap thereby to lock the strap within the locking head. The insert is positioned adjacent the locking head. When the strap is locked within the locking head and positioned about the surface of the flexible conduit, the arc surface of the insert exerts a compressive force on the outside surface of the flexible conduit.

### BRIEF DESCRIPTION OF THE DRAWINGS

Figure 1 is a side, partially cross sectional view of the tie wrap connector of this invention.
Figure 2 is a cross sectional view of the tie wrap connector of Figure 1 taken along line 2-2 of Figure 1.
Figure 3 is a front view of the tic wrap connector of Figure 1.
Figure 4 is a side view of a tie wrap connector of the prior art in use.
Figure 5 is a side view of a tie wrap connector of this invention in use.
Figure 6 is a top, partial cross sectional view of the tie wrap connector of Figure 5 in use.
Figure 7 is a side view of an alternative embodiment of a tie wrap connector of this invention in use.
Figure 8 is a side view of an alternative embodiment of a tie wrap connector of this invention in use.

### BRIEF DESCRIPTION OF SPECIFIC EMBODIMENTS

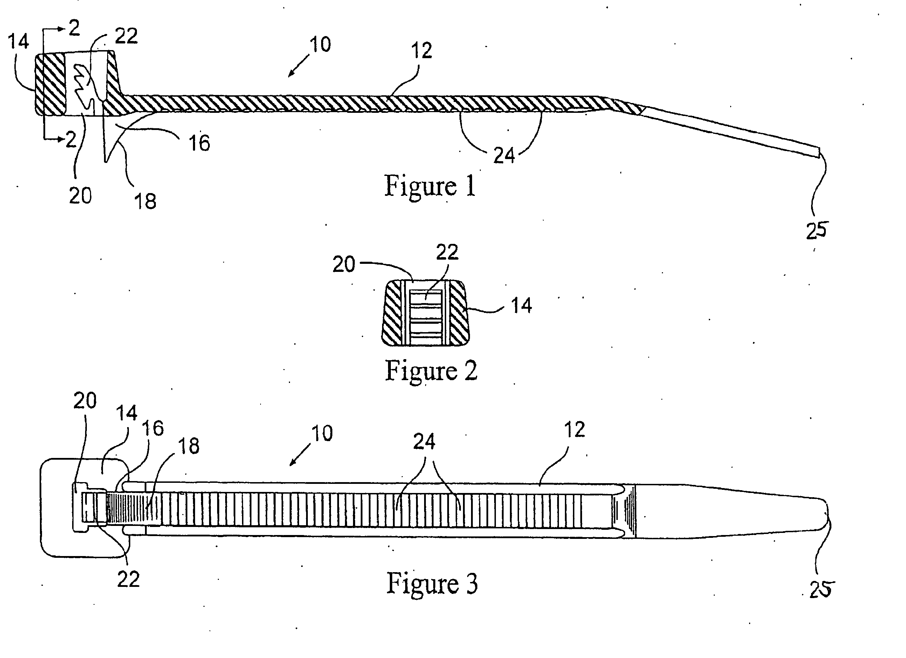

Referring to Figures 1, 2 and 3, the tie wrap connector of this invention 10 includes a strap 12, a locking head 14 and an insert 16 having an arc shaped surface 18. The locking head 14 includes an opening 20 that extends through the thickness of the locking head 14 and a locking device 22 such as the ratcheting panel shown in the Figure. The strap 12 includes steps 24 that cooperate with the device 22 so that the strap 12 is locked within the locking head 14 and, usually through the locking head 14 so that the steps 24 contact the locking device 22 thereby to lock the strap 12 in place within the locking head 14.

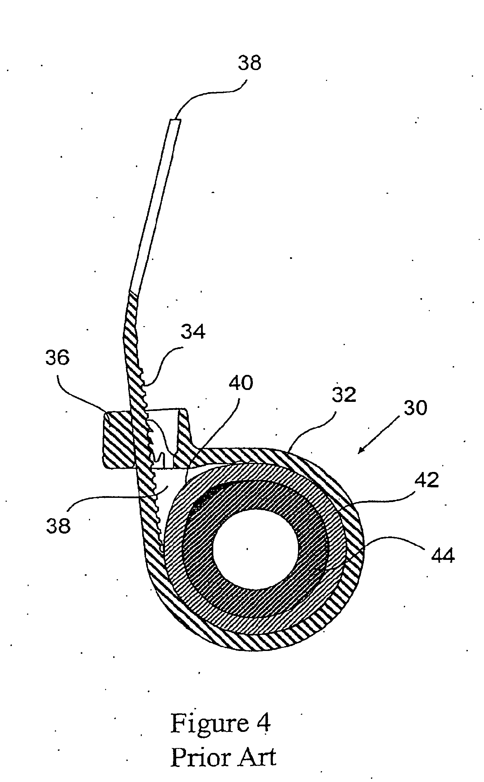

Referring to Figure 4, a tie wrap connector 30 of the prior art is shown. The tie wrap connector 30 includes a strap 32 having steps 34 and a locking head 36. The locking head 36 includes any conventional means for passing the free end 38 through the locking head 36 and for locking the strap 34 within the locking head 36. Since the locking head 36 is not sufficiently flexible, a gap 38 is formed between the strap 32 and a portion 40 of the outside surface of flexible conduit 42. The flexible conduit 42 is positioned over hollow barbed conduit 44. Thus there is no compression force on the portion 40 of the flexible conduit 42 thereby increasing the possibility of leakage between the flexible conduit 42 and barbed conduit 44.

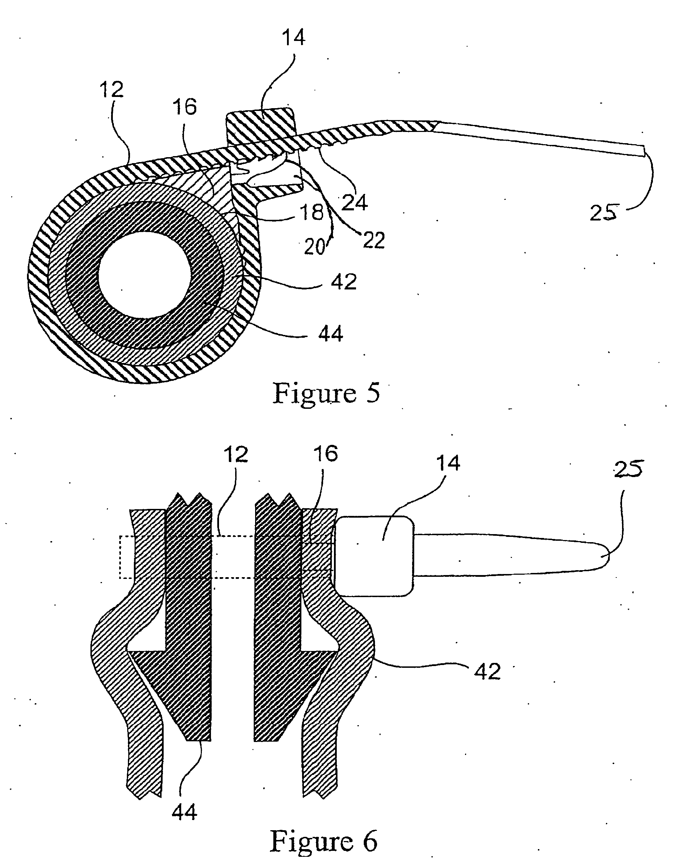

Referring to Figures 5 and 6, the tie wrap connector of this invention is shown. The tie wrap connection includes the strap 12, the locking head 14 and the insert 16 having the arc shaped surface 18. As the end 24 of the strap 12 is pulled through the locking head 14, a compressive force is exerted on the insert 16 by the strap 12. This, in turn, causes a compressive force to be exerted on the flexible conduit 42 by the insert 16. The remaining portion of the strap 12 in contact with the flexible conduit 42 also exerts a compressive force on the flexible conduit 42 so that the entire outside surface of the flexible conduit 42 is subject to direct compressive force. The strap 12 is kept in place against the flexible conduit 42 by the interaction of the locking device 22 and the steps 24 of the strap 12 thus securing the flexible conduit 42 to the barbed conduit 44 This results in an improved seal between the flexible conduit 42 and the barbed conduit 44.

According to the invention, the insert comprises a separate piece that can be inserted in the desired area when it is desired to use the tie wrap connector. In such a free-standing design the insert 16 contains a device (not shown) for removably securing it to the strap 12 if desired such as a slot on the side of the insert 16 facing the strap 12 through which the strap 12 may be placed.

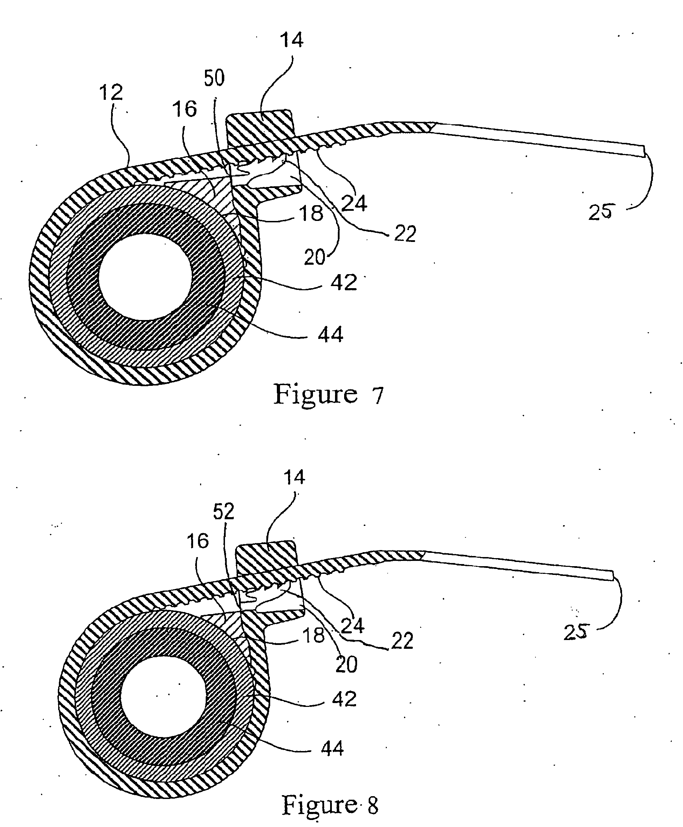

Additionally, the height of the insert 16 and the length of the arc 18 can be varied to accommodate a greater or lesser amount of the surface of the flexible tubing 42 as is required by the desired application, as is shown in Figures 5, 7 and 8. In Figure 5, the height of the insert 16 relative to the opening 20 of the locking head 14 is substantially the same as that of the locking device 22 so that the arc 18 is spread over as much surface of the flexible conduit 42 as possible. In Figure 7, the height of the insert 16 is less than that of the embodiment of Figure 5 and is substantially the same as that of the base 50 of the locking device 22 in the locking head 14. In Figure 8, the height of the insert 16 is substantially the same as the lower base 52 of the opening 20 of the locking head 14.

## Claims

1. A tie wrap connector (10) comprising:
a strap (12) having a free end (25) and an opposite end joined to a strap locking head (14),
said locking head (14) having a strap receiving opening (20) therein, the opening (20) having a device (22) for securing a portion of the strap (12) within the opening (20), and
an insert (16) positioned adjacent said locking head (14), said insert (16) having an arc shaped surface (18) positioned remote from said locking head (14), **characterized in that**
said insert (16) is formed separately from said locking head (14) and said strap (12), and
said insert (16) contains a device for removably securing the insert (16) to the strap (12).

2. The connector of claim 1 wherein the device (22) for securing a portion of the strap (12) is a ratchet and the strap (12) has a series of steps (24) that mate with the ratchet of the locking head (14).

3. The connector of claim 1 or 2 wherein the insert (16) is of a height that is substantially equal and planar with the opening (20) of the locking head (14).

4. The connector of any one of claims 1 to 3 wherein the insert (16) is of a height that is substantially equal and planar with the device (22) for securing a portion of the strap (12) within the opening (20) of the locking head (14).

5. The connector of any one of claims 1 to 4 wherein said device is a slot on the side of the insert (16) facing the strap (12) through which the strap (12) may be placed.

## Patentansprüche

1. Ein Kabelbinde-Verbinder (10) mit:
einem Band (12) mit einem freien Ende (25) und einem entgegengesetzten Ende, das mit einem Band-Verriegelungskopf (14) verbunden ist,
wobei der Verriegelungskopf (14) eine Band-Aufnahmeöffnung (20) darin aufweist, und die Öffnung (20) eine Vorrichtung (22) zum Sichern eines Abschnitts des Bandes (12) in der Öffnung (20) besitzt, und
einem Einsatz (16), der angrenzend an den Verriegelungskopf (14) positioniert ist, wobei der Einsatz (16) eine bogenförmige Oberfläche (18) besitzt, die von dem Verriegelungskopf (14) entfernt positioniert ist,
**dadurch gekennzeichnet, dass**
der Einsatz (16) separat von dem Verriegelungskopf (14) und dem Band (12) ausgebildet ist, und
der Einsatz (16) eine Vorrichtung zum entfernbaren Sichern des Einsatzes (16) an dem Band (12) enthält.

2. Der Verbinder gemäß Anspruch 1, wobei die Vorrichtung (22) zum Sichern eines Abschnitts des Bandes (12) eine Ratsche ist, und das Band (12) eine Reihe von Stufen (24) besitzt, die zu der Ratsche des Verriegelungskopfs (14) passen.

3. Der Verbinder gemäß Anspruch 1 oder 2, wobei der Einsatz (16) eine Höhe besitzt, die im Wesentlichen gleich und planar mit der Öffnung (20) des Verriegelungskopfs (14) ist.

4. Der Verbinder gemäß einem der Ansprüche 1 bis 3, wobei der Einsatz (16) eine Höhe besitzt, die im Wesentlichen gleich und planar mit der Vorrichtung (22) zum Sichern eines Abschnitts des Bandes (12) in der Öffnung (20) des Verriegelungskopfs (14) ist.

5. Der Verbinder gemäß einem der Ansprüche 1 bis 4, wobei die Vorrichtung ein Schlitz an der Seite des Einsatzes (16) ist, der dem Band (12) zugewandt ist und durch den das Band (12) platziert werden kann.

## Revendications

1. Connecteur (10) pour attache enroulée, comprenant :
une courroie (12) ayant une extrémité (25) libre et une extrémité opposée réunie à une tête (14) de verrouillage de la courroie,
la tête (14) de verrouillage ayant en son sein une ouverture (20) de réception de la courroie, l'ouverture (20) ayant un dispositif (22) de fixation d'une partie de la courroie (12) dans l'ouverture (20), et
un insert (16) placé au voisinage de la tête (14) de verrouillage, l'insert (16) ayant une surface (18) conformée en arc et placée loin de la tête (14) de verrouillage, **caractérisé en ce que**
l'insert (16) est formé séparément de la tête (14) de verrouillage et de la courroie (12), et
l'insert (16) contient un dispositif de fixation de manière amovible de l'insert à la courroie (12).

2. Connecteur suivant la revendication 1, dans lequel le dispositif (22) de fixation d'une partie de la courroie (12) est un rochet et la bande (12) a une série de crans (24), qui sont conjugués avec le rochet de la tête (14) de verrouillage.

3. Connecteur suivant la revendication 1 ou 2, dans lequel l'insert (16) a une hauteur telle qu'il est sensiblement au même niveau et dans le même plan que l'ouverture (20) de la tête (14) de verrouillage.

4. Connecteur suivant l'une quelconque des revendications 1 à 3, dans lequel l'insert (16) a une hauteur telle qu'il est sensiblement au même niveau et dans le même plan que le dispositif (22) de fixation d'une partie de la courroie (12) dans l'ouverture (20) de la tête (14) de verrouillage.

5. Connecteur suivant l'une quelconque des revendications 1 à 4, dans lequel le dispositif est une fente sur le côté de l'insert (16) faisant face à la courroie (12), fente dans laquelle la courroie (12) peut être mise.
